# EUROPEAN PATENT SPECIFICATION

(11) **EP 3 919 300 B1**
(45) Date of publication and mention of the grant of the patent: **18.09.2024**
(21) Application number: 20748232.4
(22) Date of filing: 28.01.2020
(51) Int. Cl.: B60H 1/22, F28D 20/00, F24H 7/02, C09K 5/16, B60H 1/00, F28D 21/00

(54) **HEAT-STORAGE DEVICE**
WÄRMESPEICHERVORRICHTUNG
DISPOSITIF DE STOCKAGE DE CHALEUR

(30) Priority: 29.01.2019 JP 2019013407
(43) Date of publication of application: 08.12.2021
(73) Proprietor: National University Corporation Tokai National Higher Education and Research System, Nagoya-shi, Aichi 464-8601 (JP)
(72) Inventor: KOBAYASHI, Noriyuki, Nagoya-shi, Aichi 464-8601 (JP); ICHINOSE, Atsuhiro, Nagoya-shi, Aichi 464-8601 (JP); SHIMIZU, Takuya, Nagoya-shi, Aichi 464-8601 (JP)
(74) Representative: Müller-Boré & Partner Patentanwälte PartG mbB
(86) International application number: PCT/JP2020/003002
(87) International publication number: WO 2020/158740

(56) References cited:
- WO-A1-2012/063838
- WO-A1-2015/050269
- DE-A1- 102012 006 312
- DE-A1- 102014 104 719
- DE-U1- 202013 004 832
- JP-A- 2009 138 984
- JP-A- 2013 124 823
- JP-A- 2016 050 681
- JP-A- H0 517 760
- JP-B2- H0 140 267

## Description

### TECHNICAL FIELD

The present invention relates to a heat storage device operated by air and electric power.

### BACKGROUND ART

In general, in a conventional engine automobile, a mechanism operated as a mechanical compression type air conditioning device (air conditioner) is only a cooling device for cooling a compartment and the compartment is warmed by using heat of cooling water of an engine. This is because the air conditioner cannot be used in winter due to frost formation. Even if the air conditioner is used, the air conditioner is used only above approximately 10°C and a heater utilizing exhaust heat of the engine is used for warming the compartment when the outside air temperature is 10°C or less.

In addition, an electric car has been developed in recent years. For example, Patent Document 1 discloses an air conditioner for the electric car constituted of a heat pump type air conditioning system, a heat storage type air conditioning system and a combustion type air conditioning system capable of securing sufficient heating capacity even at a low temperature and reducing burden to a battery.

However, in the conventional air conditioner for the electric cars shown in Patent Document 1, for example, a problem is that the air conditioner occupies large space since the air conditioner is a large device. In addition, a problem is that the system becomes large scale as a whole because complicated control is required. Therefore, in order to cope with the above described problems, it can be considered that heat is stored by electric power using chemical heat storage and the heat is used for a heater (heating device).
DE 20 2013 004832 U1 discloses a thermochemical heat accumulator with a storage medium for heat storage via a reversible gas-solid reaction, wherein the heat accumulator can be operated using an oxygen-containing process gas and wherein the storage medium is designed as a multi-component system with at least two metal oxides.

### PRIOR ART DOCUMENTS

### [Patent Documents]

[Patent Document 1]
Japanese Patent Application Laid-Open No. H6-143973.

### DISCLOSURE OF THE INVENTION

### [Problems to be Solved by the Invention]

However, when the chemical heat storage or the like is used for storing the heat by the electric power and the heat is used for the heater, an evaporator and a condenser are required. Thus, large space is needed and the weight is increased. In addition, the control of the evaporator and the condenser is required. As a result, a problem is that the system becomes large scale. Furthermore, if water is used as a reaction medium, the water freezes. Thus, chlorofluorocarbon, ammonia and the like are used in many cases since they do not freeze. However, a problem is that the system is enlarged since the heat storage amount per volume is small.

The present invention is made for solving the above described problems and aims for providing a heat storage device having a simple and small shape without occupying large space when mounted on the electric car and capable of storing and releasing heat efficiently without using water so that the heat storage device is used as a heater.

### [Means for Solving the Problem]

In order to achieve the purpose described above, the heat storage device of the present invention includes: a heat storage material configured to be oxidized and deoxidized by a temperature control operation; a heat transfer material for heating the heat storage material; at least a pair of electrodes configured to be connected to a power source for heating the heat transfer material; and a container containing the heat storage material, the heat transfer material and the at least a pair of electrodes; an upstream valve provided on an upstream inlet of the container for shielding an inside of the container from an outside of the container; and a downstream valve provided on a downstream outlet of the container for shielding the inside of the container from the outside of the container.

### [Effects of the Invention]

When the heat storage device of the present invention is used, because the heat storage device is operated only by the air and the electric power, the structure can be simple and the whole volume can be small. The heat can be stored and released efficiently since the electric power is converted into heat of chemical reaction in the air and densely stored and the stored heat can be extracted at high rate at an arbitrary time when the heat is needed.

### BRIEF DESCRIPTION OF THE DRAWINGS

Fig. 1 is a table showing examples of reaction system of chemical heat storage using oxidation-reduction reaction.
Fig. 2 is a drawing schematically showing an example of a brief configuration of a heat storage device in the embodiment 1.
Fig. 3 is a drawing schematically showing another example of a brief configuration of a heat storage device in the embodiment 1.
Figs. 4A and 4B are flow charts showing an example of operations of storing and releasing heat in the heat storage device in the embodiment 1.
Fig. 5 is a graph showing a relation between a temperature and an oxygen concentration in a state that cobalt monoxide (CoO) and tricobalt tetroxide (Co₃O₄) are present in a mixed gas of oxygen and nitrogen.
Figs. 6A and 6B are explanatory drawings showing a reduction behavior from the tricobalt tetroxide to the cobalt monoxide and an oxidization behavior from the cobalt monoxide to the tricobalt tetroxide under the condition of flowing air. The values are measured using a thermal balance.
Fig. 7 is an explanatory drawing showing an example of a behavior of storing heat (reduction behavior) under the condition of flowing high temperature air.
Fig. 8 is an explanatory drawing showing an example of a behavior of releasing heat (oxidization behavior) under the condition of flowing high temperature air.
Fig. 9 is a drawing schematically showing an example of a brief configuration of a heat storage device in the embodiment 2.
Figs. 10A, 10B and 10C are drawings showing a partial and brief configuration of an experimental demonstration device of the heat storage device in the embodiment 2.
Figs. 11A and 11B are explanatory drawings showing an example of operations of storing and releasing heat in the heat storage device in the embodiment 2.

### MODES FOR CARRYING OUT THE INVENTION

The present invention aims for providing a heat storage device having a simple and small shape without occupying large space when mounted on the electric car and capable of storing (accumulating) and releasing (radiating) heat efficiently without using water so that the heat storage device is used as a heater. The present invention relates to the heat storage device operated by the air and the electric power.

Hereafter, the embodiments of the present invention will be explained in detail with reference to the drawings.

### Embodiment 1.

A heat storage device concerning the embodiment 1 of the present invention applies the chemical heat storage using the oxidation-reduction (deoxidization) reaction achieved by the temperature control operation. The heat storage device is operated by the air and the electric power.

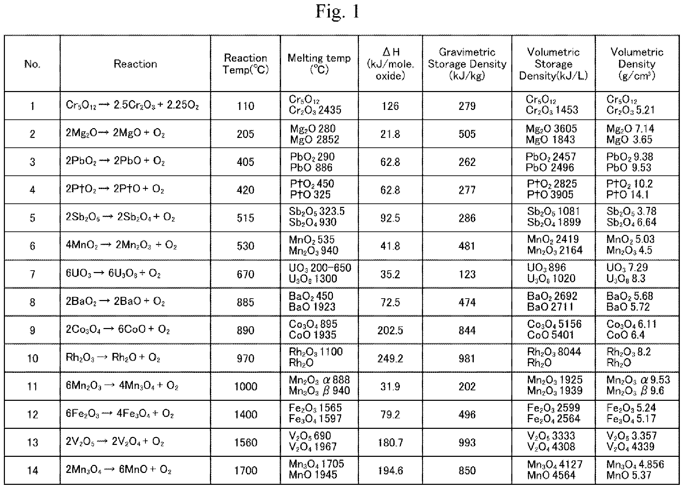

Here, Fig. 1 is a table showing examples of reaction system of the chemical heat storage using the oxidation-reduction reaction. Fig. 1 shows the reaction formula and the reaction temperature of the substances to be oxidized and deoxidized (reduced) by the temperature control operation and the melting point of the substances. In the embodiment 1, the explanation will be made by using the following example of the reaction shown in No. 9 of Fig. 1.

"2Co₃O₄ (tricobalt tetroxide) → 6CoO (cobalt monoxide) + O₂ (oxygen)"

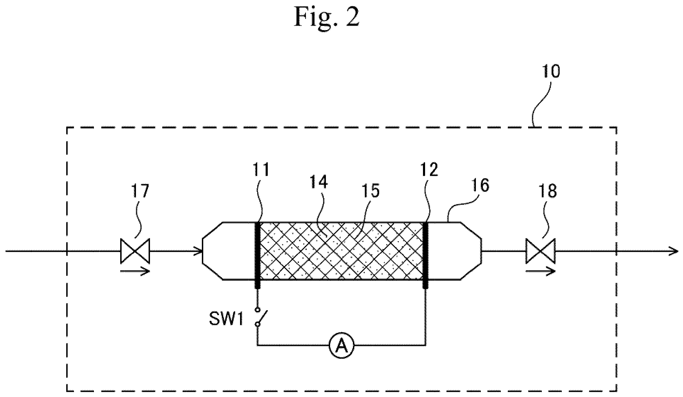

Fig. 2 is a drawing schematically showing an example of a brief configuration of the heat storage device in the embodiment 1 of the present invention. In Fig. 2, the air is made to flow through a heat storage material 14 in one direction (i.e., from the left to the right direction in the figure). The heat storage device 10 includes: a heat storage material 14 configured to be oxidized and deoxidized by a temperature control operation; a heat transfer material 15 for heating the heat storage material 14; at least a pair of electrodes 11, 12 (the at least a pair of electrodes are a first electrode 11 and a second electrode 12 in the embodiment 1) configured to be connected to a power source (electric power source) for heating the heat transfer material 15; a container 16 containing the heat storage material 14, the heat transfer material 15 and the at least a pair of electrodes 11, 12; and an upstream valve 17 and a downstream valve 18 for shielding the inside of the container 16 from the outside of the container 16. The upstream valve 17 is provided on an upstream inlet of the container 16, and the downstream valve 18 is provided on a downstream outlet of the container 16. Although the devices related to the temperature control operation such as a thermometer and a temperature adjusting unit are connected to the heat storage device 10, the illustration and explanation of these devices are omitted.

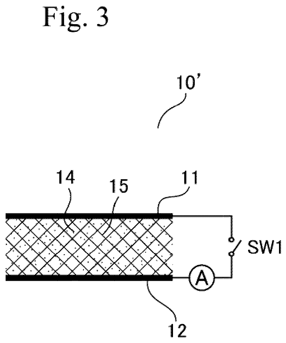

Fig. 3 is a drawing schematically showing another example of a brief configuration of the heat storage device in the embodiment 1. A heat storage device 10' shown in Fig. 3 includes: a heat storage material 14 configured to be oxidized and deoxidized by a temperature control operation; a heat transfer material 15 for heating the heat storage material 14; and at least a pair of electrodes 11, 12 configured to be connected to a power source for heating the heat transfer material 15. Also in Fig. 3, the air is made to flow through the heat storage material 14 in one direction (i.e., from the left to the right direction in the figure).

In Fig. 2 and Fig. 3, the diagonal grids indicate the heat transfer material 15, and dots indicate the heat storage material 14. Namely, in the example shown in Fig. 2, the heat transfer material 15 is arranged on an approximately entire inner part of the container 16 from near the inlet of the container 16 to near the outlet of the container 16. The heat transfer material 15 is filled with the heat storage material 14 so that the heat transfer material 15 carries the heat storage material 14. Also in the example shown in Fig. 3, the heat transfer material 15 is filled with the heat storage material 14 and the heat transfer material 15 carries the heat storage material 14.

In the example shown in Fig. 2, in the at least a pair of electrodes (first electrode 11 and second electrode 12 in the embodiment 1), the first electrode 11 is arranged near the inlet in the container 16 (position near the upstream valve 17). Namely, the first electrode 11 is arranged on an upstream side end part in a flow path of the air flowing through the heat storage material 14. The second electrode 12 is arranged near the outlet in the container 16 (position near the downstream valve 18). Namely, the second electrode 12 is arranged on a downstream side end part in a flow path of the air flowing through the heat storage material 14. On the other hand, in the example shown in Fig. 3, the pair of electrodes 11, 12 is arranged on the positon not located on the upstream side and the downstream side. The pair of electrodes 11, 12 can be arranged on the position shown in Fig. 3 as long as the pair of electrodes 11, 12 can heat the whole heat storage material 14 evenly.

The heat transfer material 15 for heating the heat storage material 14 and the at least a pair of electrodes 11, 12 constitute an electric heater. The heat transfer material 15 is heated by connecting the at least a pair of electrodes 11, 12 to the power source. Namely, the electric heater is comprised of the heat transfer material 15 and the at least a pair of electrodes 11, 12, and the at least a pair of electrodes is configured to be connected to the power source for heating the heat transfer material 15.

As described above, because the reaction of No. 9 in the table shown in Fig. 1 is used in the embodiment 1, the heat storage material 14 is the tricobalt tetroxide (or the cobalt monoxide).

In the embodiment 1, SiC (silicon carbide) porous body is used as the heat transfer material 15. As described above, the heat transfer material 15 formed of the SiC porous body is arranged on an approximately entire inner part of the container 16 from near the inlet (upstream side) of the container 16 to near the outlet (downstream side) of the container 16. Namely, the heat transfer material 15 is arranged on a part sandwiched by the first electrode 11 and the second electrode 12. Thus, the electric heater is formed. Since the porous body portion of the heat transfer material 15 is filled with the heat storage material 14, the heat storage material 14 can be also heated when the heat transfer material 15 is heated. As described above, because the heat transfer material 15 carries the heat storage material 14, the whole heat storage material 14 can be rapidly and evenly heated. It is possible to store or release the heat in only several minutes.

Note that the heat transfer material 15 can be any material as long as the heat transfer material 15 can heat the heat storage material 14 filling the inside of the container 16. When the heating temperature can be lowered, the material such as stainless-steel can be used. As for the shape, it is possible to arrange a rod-shaped heat transfer material 15' along a central axis of the container 16 and fill the container 16 with the heat storage material 14 so that the heat storage material 14 surrounds the periphery of the heat transfer material 15', for example.

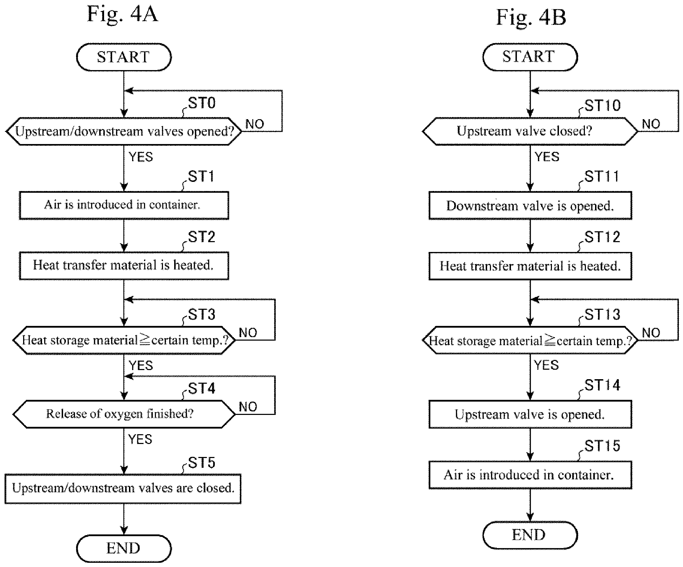

Figs. 4A and 4B are flow charts showing an example of operations of storing and releasing heat in the heat storage device 10 in the embodiment 1. Fig. 4A shows the operation of storing the heat and Fig. 4B shows the operation of releasing the heat.

When storing the heat, as shown in Fig. 4A, first of all, whether or not the upstream valve 17 and the downstream valve 18 are opened is checked (Step ST0). Normally, because the upstream valve 17 and the downstream valve 18 are opened after the later described operation of releasing the heat, the operation of storing the heat can be started from that state (opened state). If the upstream valve 17 and the downstream valve 18 are not opened (No in Step ST0), the downstream valve 18 and the upstream valve 17 are opened to introduce the air in the container 16 (Step ST1). Then, the first electrode 11 and the second electrode 12 are connected to the power source (switch SW1 shown in Fig. 2 is closed) to supply DC or AC power. Thus, the heat transfer material 15 containing the heat storage material 14 is heated (Step ST2). Consequently, the heat storage material 14 is heated.

When the heat storage material 14 reaches a certain temperature (predetermined temperature) (Yes in Step ST3), the heat storage material 14 releases the oxygen. Namely, the heat storage material 14 is changed into the substance which is deoxidized compared to the original state (i.e., the substance in which the heat is stored). After the release of the oxygen is finished (Yes in Step ST4), the upstream valve 17 and the downstream valve 18 are closed to function as shutoff valves (Step ST5). Thus, the heat storage material 14 is prevented from being oxidized again by the air entering from the outside. Whether or not the release of the oxygen is finished (Step ST4) is judged by measuring the temperature to know whether or not the endothermic reaction is finished.

When releasing the heat, as shown in Fig. 4B, first of all, whether or not the upstream valve 17 is closed is checked (Step ST10). Normally, the upstream valve 17 and the downstream valve 18 are closed after the operation of storing the heat (after Step ST5). If the upstream valve 17 is not closed (No in Step ST10), the upstream valve 17 is closed and then the downstream valve 18 is opened (Step ST11). Also when releasing the heat, the first electrode 11 and the second electrode 12 are connected to the power source (switch SW1 shown in Fig. 2 is closed) to supply DC or AC power. Thus, the heat transfer material 15 is heated (Step ST12). Consequently, the heat storage material 14 is heated.

When the heat storage material 14 reaches a certain temperature (predetermined temperature) (Yes in Step ST13), the upstream valve 17 which is a shutoff valve of the upstream side located near the first electrode 11 is opened (Step ST14). Thus, the air is introduced in the container 16 from the outside (Step ST15). Consequently, the oxygen contained in the air is reacted with the heat storage material 14 for generating the heat. The flowing air is heated by the generated heat, and the heated air is transferred to the downstream side. Thus, the temperature of the heat storage material 14 is increased so that the oxidation reaction is started. As described above, the oxidation reaction is caused over the whole heat storage device 10 to release and supply the heat.

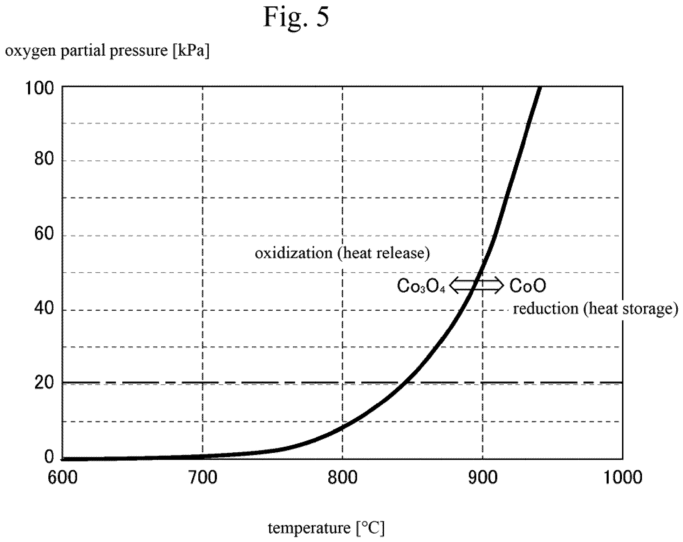

Fig. 5 is a graph showing a relation between a temperature and an oxygen concentration in a state that cobalt monoxide (CoO) and tricobalt tetroxide (Co₃O₄) are present in a mixed gas of oxygen and nitrogen. The horizontal axis shows the temperature and the vertical axis shows the oxygen partial pressure (oxygen pressure). In Fig. 5, the cobalt exists as the tricobalt tetroxide at an area located at the left side of the curved line shown by the solid line, and the cobalt exists as the cobalt monoxide at an area located at the right side of the curved line. The straight line shown by dashed-and-dotted line in Fig. 5 shows 20.9 % in the oxygen concentration. The straight line shown by dashed-and-dotted line crosses the curved line shown by the solid line at approximately 850°C in the temperature.

Namely, under the condition of 20.9% in the oxygen concentration, which is the same oxygen concentration as the air, the cobalt exists as the tricobalt tetroxide at the temperature less than approximately 850°C, and the cobalt exists as the cobalt monoxide at the temperature more than approximately 850°C. Accordingly, when the cobalt monoxide is placed in the air having the temperature of approximately 850°C or less, the cobalt monoxide is oxidized and converted into the tricobalt tetroxide while releasing reaction heat. When the tricobalt tetroxide is placed in the air having the temperature of approximately 850°C or more, the tricobalt tetroxide is deoxidized and converted into the cobalt monoxide while absorbing the heat. By using the property of the above described chemical equilibrium, the reduction (deoxidization) of the tricobalt tetroxide and the oxidization of the cobalt monoxide are reversibly repeated to store the heat and release the heat while controlling the temperature of the material in the presence of the air.

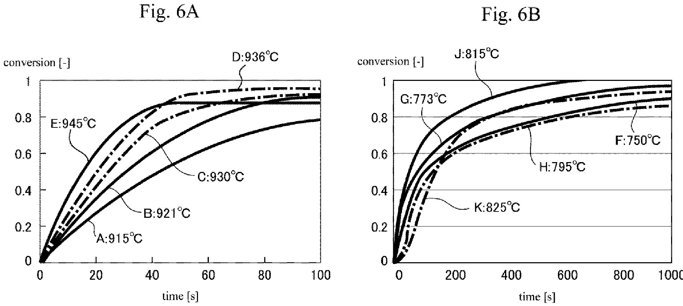

Figs. 6A and 6B are explanatory drawings showing a reduction behavior (Fig. 6A) from the tricobalt tetroxide to the cobalt monoxide and an oxidization behavior (Fig. 6B) from the cobalt monoxide to the tricobalt tetroxide under the condition of flowing air. The values are measured using a thermobalance.

Fig. 6A shows the result of analyzing the reduction behavior from the particles of the tricobalt tetroxide (several milligrams) to the cobalt monoxide under the condition of flowing air while changing the temperature. The values are measured using a thermobalance. The horizontal axis shows the time and the vertical axis shows the conversion in reduction reaction. Fig. 6B shows the result of analyzing the oxidization behavior from the cobalt monoxide to the particles of the tricobalt tetroxide under the condition of flowing air while changing the temperature. The values are measured using a thermobalance. Same as Fig. 6A, the horizontal axis shows the time and the vertical axis shows the conversion in oxidization reaction.

Fig. 6A shows five patterns of the temperatures 915°C, 921°C, 930°C, 936°C and 945°C. The solid line A shows the case of the temperature 915°C, the solid line B shows the case of the temperature 921°C, the dashed-and-dotted line C shows the case of the temperature 930°C, the dashed-and-dotted line D shows the case of the temperature 936°C, and the solid line E shows the case of the temperature 945°C. Referring to Fig. 6A, it can be understood that the reduction reaction is advanced at the temperature of 915°C or more in the presence of the air. It can be also confirmed that the rate of the reduction reaction increases as the temperature increases and the reduction reaction finishes within approximately 60 seconds at the temperature of 936°C or more.

Fig. 6B shows five patterns of the temperatures 750°C, 773°C, 795°C, 815°C and 825°C. The solid line F shows the case of the temperature750°C, the solid line G shows the case of the temperature773°C, the dashed-and-dotted line H shows the case of the temperature795°C, the solid line J shows the case of the temperature 815°C, and the dashed-and-dotted line K shows the case of the temperature 825°C. Referring to Fig. 6B, it can be understood that the oxidization reaction is advanced at the temperature of 773°C or more in the presence of the air. It can be also confirmed that the oxidization reaction is rapidly advanced until 200 seconds have passed after the oxidization reaction is started, then the reaction rate is reduced and the oxidization reaction is continued until 1000 seconds.

It can be also confirmed that the oxidation operation and the reduction operation shown in Fig. 6A and Fig. 6B can be reversibly repeated.

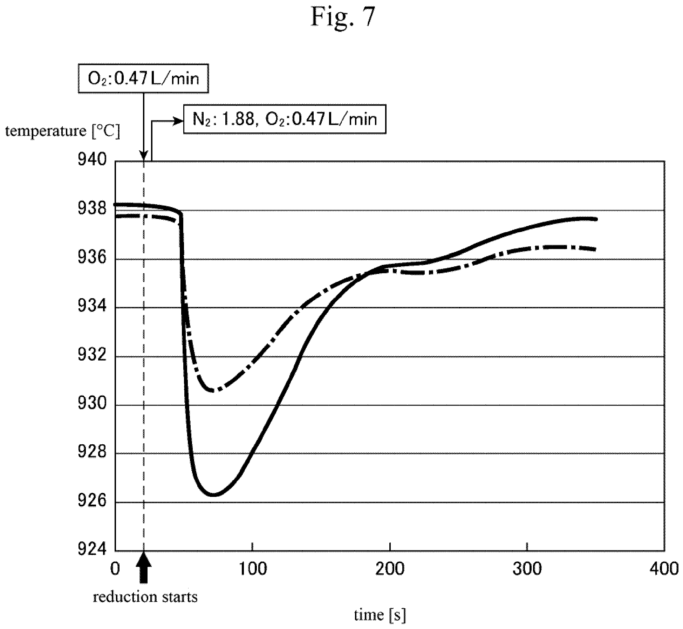

Fig. 7 is an explanatory drawing showing an example of the behavior of storing heat (reduction behavior) under the condition of flowing high temperature air. The horizontal axis shows the time and the vertical axis shows the temperature. In the above described Fig. 6, it is confirmed by using the thermobalance that the reduction (heat storage) and the oxidization (heat release) can be reversibly repeated under the condition of flowing air. Based on the above described fact, the reversibility of the operations of the reduction (heat storage) and the oxidization (heat release) and the reaction rate are considered similar to the experiment of the thermobalance. Assuming to be a device, approximately 1 gram of the tricobalt tetroxide (heat storage material 14) is carried on the porous body of silicon carbide (heat transfer material 15) and placed in an electric heating furnace.

In Fig. 7, the graph shown by the solid line shows the state where the temperature of the heat storage material 14 is changed with time at near the center of the filled layer (i.e., near the center of the container 16 in which the heat storage material 14 is contained in the heat storage device 10 shown in Fig. 2). The graph shown by the dashed-and-dotted line shows the state where the temperature of the heat storage material 14 is changed with time at near the outer wall of the filled layer (i.e., near the inner wall of the container 16 in which the heat storage material 14 is contained in the heat storage device 10 shown in Fig. 2).

First, only the oxygen is supplied at a rate of 0.47 litters/minute while keeping the temperature of the tricobalt tetroxide at 938°C. Then, the nitrogen is added at a rate of 1.88 litters/minute so that the oxygen concentration becomes 21% which is almost same as the oxygen concentration of the air (the oxygen concentration of the air: 20.9%). As a result, it can be confirmed that the temperature in the filled layer of the tricobalt tetroxide rapidly decreases, the endothermic reaction is advanced and the reaction finishes in approximately 200 seconds.

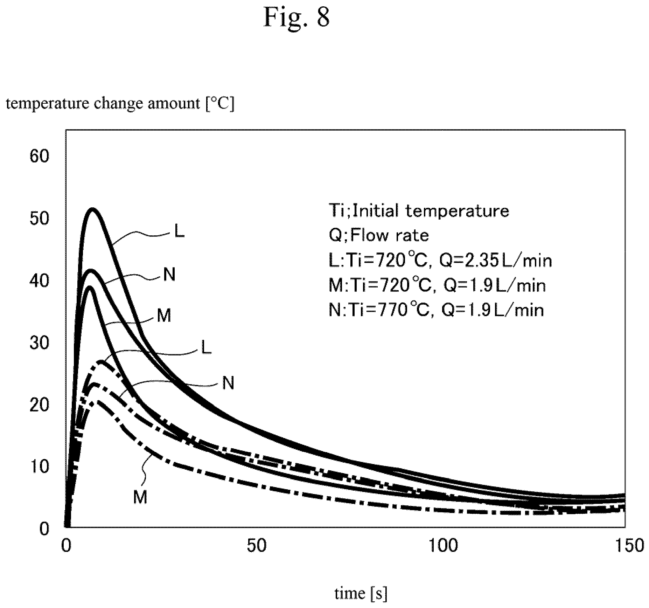

Fig. 8 is an explanatory drawing showing an example of a behavior of releasing heat (oxidization behavior) under the condition of flowing high temperature air. The horizontal axis shows the time and the vertical axis shows the temperature change amount. When the tricobalt tetroxide (heat storage material 14) carried on the porous body of silicon carbide (heat transfer material 15) is reduced and changed to the heat storage material 14 of the cobalt monoxide, the possibility and the reaction rate are considered for the operation of oxidizing the heat storage material 14 of the cobalt monoxide to the tricobalt tetroxide again to release the heat.

In Fig. 8, same as Fig. 7, the graph shown by the solid line shows the state where the temperature of the heat release (oxidization) is changed with time at near the center of the filled layer. The graph shown by the dashed-and-dotted line shows the state where the temperature of the heat release (oxidization) is changed with time at near the outer wall of the filled layer. In both the solid line and the dashed-and-dotted line of Fig. 8, the line with the symbol L indicates the situation when the initial temperature of the cobalt monoxide is 720°C and the supplying rate of the air is 2.35 litters/minute, the line with the symbol M indicates the situation when the initial temperature of the cobalt monoxide is 720°C and the supplying rate of the air is 1.9 litters/minute, and the line with the symbol N indicates the situation when the initial temperature of the cobalt monoxide is 770°C and the supplying rate of the air is 1.9 litters/minute.

After the reduction operation explained in Fig. 7 is finished, the upstream valve 17 located at the inlet (upstream side) and the downstream valve 18 located at the outlet (downstream side) are closed and the temperature of the cobalt monoxide is reduced to 720°C or 770°C as the initial temperature. Then, the upstream valve 17 located at the inlet (upstream side) and the downstream valve 18 located at the outlet (downstream side) are opened again to supply the air. As a result, it can be confirmed that the temperature in the filled layer rapidly increases and the oxidization reaction is advanced (heat is released in 20 seconds).

As explained above, the heat storage device 10 is operated only by the air and the electric power. The heat storage device 10 can be downsized because the heat storage device 10 has a simple structure comprised of: a heat storage material 14; a heat transfer material 15 for heating the heat storage material 14; at least a pair of electrodes 11, 12; a container 16 containing the heat storage material 14, the heat transfer material 15 and the at least a pair of electrodes 11, 12; and an upstream valve 17 and a downstream valve 18 for shielding the inside of the container 16 from the outside of the container 16.

Consequently, the heat storage device of the embodiment 1 does not occupy large space when mounted on the electric car. Furthermore, the heat can be stored and released efficiently because the electric power is converted into heat of chemical reaction in the air and densely stored and the stored heat can be extracted at high rate at an arbitrary time when the heat is needed. Since the water is not required when the heat storage device is used as a heater, the heat storage device can be used without problems even in winter.

As explained above, when the heat storage device of the embodiment 1 is used, because the heat storage device is operated only by the air and the electric power, the structure can be simple and the shape can be small. The heat can be stored and released efficiently because the electric power is converted into heat of chemical reaction in the air without requiring a special environment and densely stored and the stored heat can be extracted at high speed at an arbitrary time when the heat is needed.

### Embodiment 2.

Same as the embodiment 1, the heat storage device of the embodiment 2 of the present invention applies the chemical heat storage using the oxidation-reduction reaction achieved by the temperature control operation. The heat storage device is operated by the air and the electric power. Also in the embodiment 2, the explanation will be made by using the following example of the reaction shown in No. 9 of Fig. 1.

"2Co₃O₄ (tricobalt tetroxide) → 6CoO (cobalt monoxide) + O₂ (oxygen)"

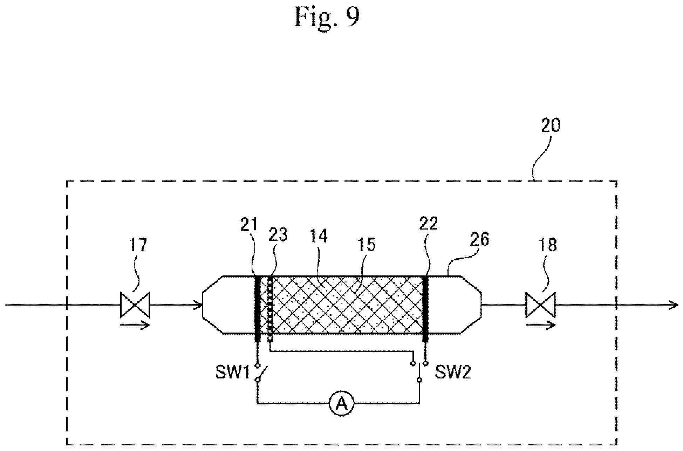

Fig. 9 is a drawing schematically showing an example of a brief configuration of a heat storage device in the embodiment 2. Note that the same reference signs are assigned to the same configuration explained in the embodiment 1 and redundant explanation will be omitted. The difference between a heat storage device 20 of the embodiment 2 shown in Fig. 9 and the heat storage device 10 of the embodiment 1 shown in Fig. 1 is the number of the electrodes provided (arranged).

As shown in Fig. 9, the heat storage device 20 of the embodiment 2 includes: a heat storage material 14 configured to be oxidized and deoxidized by a temperature control operation; a heat transfer material 15 for heating the heat storage material 14; at least a pair of electrodes 21, 22, 23 (the at least a pair of electrodes is a first electrode 21, a second electrode 22 and a third electrode 23 in the embodiment 2) configured to be connected to a power source for heating the heat transfer material 15; a container 26 containing the heat storage material 14, the heat transfer material 15 and the at least a pair of electrodes 21, 22, 23; and an upstream valve 17 and a downstream valve 18 for shielding the inside of the container 26 from the outside of the container 26. The upstream valve 17 is provided on an upstream inlet of the container 26, and the downstream valve 18 is provided on a downstream outlet of the container 26. Same as the heat storage device 10 of the embodiment 1, although the devices related to the temperature control operation such as a thermometer and a temperature adjusting unit are connected to the heat storage device 20, the illustration and explanation of these devices are omitted.

The heat storage device 10 of the embodiment 1 includes: the first electrode 11 provided near the inlet in the container 16 (position near the upstream valve 17, i.e., an upstream side end part in a flow path of the air flowing through the heat storage material 14); and the second electrode 12 provided near the outlet in the container 16 (position near the downstream valve 18, i.e., a downstream side end part in a flow path of the air flowing through the heat storage material 14) as the at least a pair of electrodes. In contrast, the heat storage device 20 of the embodiment 2 includes: the first electrode 21 provided near the inlet in the container 26 (position near the upstream valve 17, i.e., an upstream side end part in a flow path of the air flowing through the heat storage material 14); the second electrode 22 provided near the outlet in the container 26 (position near the downstream valve 18, i.e., a downstream side end part in a flow path of the air flowing through the heat storage material 14); and additionally the third electrode 23 provided near the first electrode 21 as the at least a pair of electrodes.

As shown in Fig. 9, the third electrode 23 is arranged near the inlet in the container 26 (position near the upstream valve 17) same as the first electrode 21. Namely, the third electrode 23 is arranged on an upstream side end part in a flow path of the air flowing through the heat storage material 14. In addition, the third electrode 23 is arranged adjacent to the first electrode 21 so that the second electrode 22 is nearer to the third electrode 23 than the first electrode 21. As described above, the second electrode 22 is arranged near the outlet in the container 26 (position near the downstream valve 18). Namely, the second electrode 22 is arranged on a downstream side end part in a flow path of the air flowing through the heat storage material 14.

The electric heater is comprised of the heat transfer material 15 for heating the heat storage material 14 and the at least a pair of electrodes 21, 22, 23. The heat transfer material 15 is heated by connecting any two of the at least a pair of electrodes 21, 22, 23 to the power source. Namely, the electric heater is comprised of the heat transfer material 15 and the at least a pair of electrodes 21, 22, 23 and the power source is configured to be connected to any two of the at least a pair of electrodes 21, 22, 23 for heating the heat transfer material 15.

Since the reaction of No. 9 in the table shown in Fig. 1 is used also in the embodiment 2, the heat storage material 14 is the tricobalt tetroxide.

Also in the embodiment 2, SiC (silicon carbide) porous body is used as the heat transfer material 15. The heat transfer material 15 formed of the SiC (silicon carbide) porous body is arranged on an approximately entire inner part of the container 26 from near the inlet (upstream side) of the container 26 to near the outlet (downstream side) of the container 26. Namely, the heat transfer material 15 is arranged on a part sandwiched by the first electrode 21 and the second electrode 22. Thus, the electric heater is formed. Since the porous body portion of the heat transfer material 15 is filled with the heat storage material 14, the heat storage material 14 can be also heated when the heat transfer material 15 is heated. As described above, because the heat transfer material 15 carries the heat storage material 14, the whole heat storage material 14 can be rapidly and evenly heated. It is possible to store or release the heat in only several minutes.

Note that the heat transfer material 15 can be any material as long as the heat transfer material 15 can heat the heat storage material 14 filling the inside of the container 26. When the heating temperature can be lowered, the material such as stainless-steel can be used. As for the shape, it is possible to arrange a rod-shaped heat transfer material 15' along a central axis of the container 26 and fill the container 26 with the heat storage material 14 so that the heat storage material 14 surrounds the periphery of the heat transfer material 15', for example.

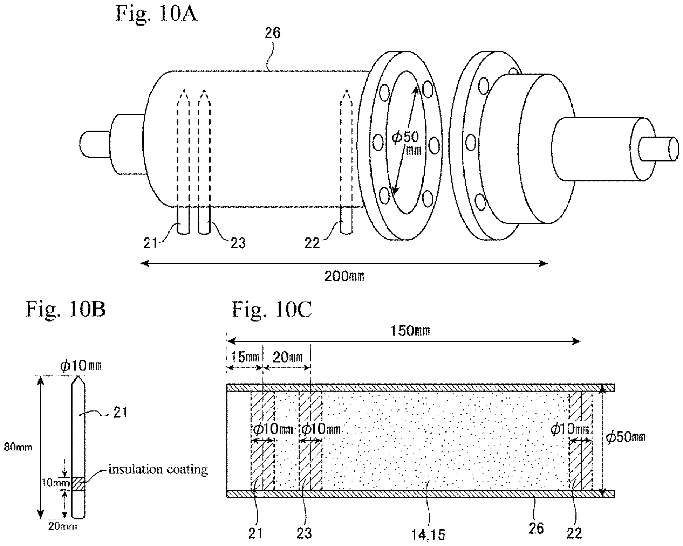

Figs. 10A, 10B and 10C are drawings showing a partial and brief configuration of an experimental demonstration device of the heat storage device 20 in the embodiment 2 of the present invention. Fig. 10A is a perspective view showing a brief configuration of the container 26 and the electrodes 21, 22, 23 of the demonstration device of the heat storage device 20. Fig. 10B is a detailed cross-sectional view of the electrode 21. Fig. 10C is a cross sectional view of an inside of the container 26 schematically showing a part of the heat transfer material 15 (SiC porous body) in which the heat storage material 14 is contained and the positional relation of the electrodes 21, 22, 23. Note that the material of the electrode 21 is SiC (silicon carbide) and an insulation coating is applied on the slant line part of Fig. 10B. The electrodes 22, 23 are made of same material and have same structure as the electrode 21 shown in Fig. 10B

As shown in Figs. 10A, 10B and 10C, the container 26 of the heat storage device 20 has a cylindrical shape having a diameter of 50 mm (5 cm) and a height (length) of 200 mm (20 cm). The heat transfer material 15 made of the SiC porous body is arranged on an approximately three quarters (15 cm in the length of 20 cm) of the inner part of the container 26 and the heat transfer material 15 (SiC porous body) is filled with the heat storage material 14. Accordingly, the heat storage material 14 is also arranged on an approximately three quarters of the inner part of the container 26. Note that the size and the shape of the container 26 are not limited to the above described example. The experiment was carried out also for the cylindrical container having a length of 10 cm which is smaller than the container of the above described example. Thus, the container is simple and small.

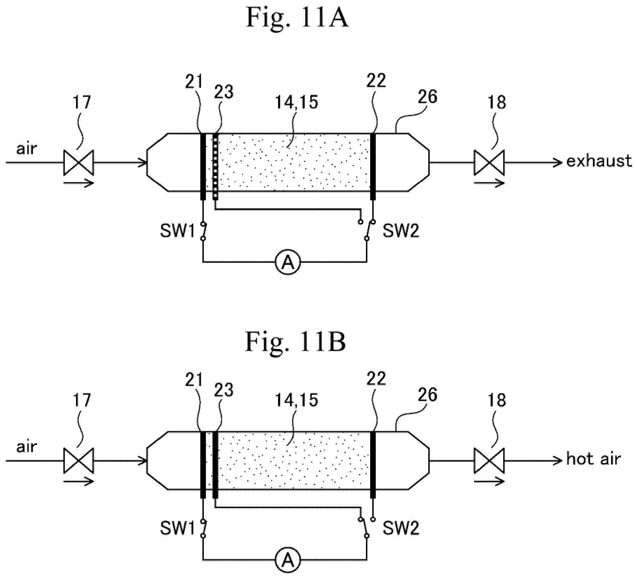

Figs. 11A and 11B are explanatory drawings showing an example of operations of storing and releasing heat in the heat storage device 20 in the embodiment 2 of the present invention. Fig. 11A shows the operation of storing heat and Fig. 11B shows the operation of releasing heat. Note that the illustration of the flow chart of this example is omitted because it is same as the flow chart of the embodiment 1 shown in Figs. 4A and 4B.

When storing heat, as shown in Fig. 11A, the upstream valve 17 is opened to introduce the air into the container 26, and the first electrode 21 and the second electrode 22 are connected to the power source (switch SW1 shown in Fig. 9 is closed and SW2 shown in Fig. 9 is connected to the second electrode 22 to get the connection state shown in Fig. 11A) to supply DC or AC power. Thus, the heat transfer material 15 in which the heat storage material 14 is contained is heated. Consequently, the heat storage material 14 is heated. When the heat storage material 14 reaches a certain temperature (predetermined temperature), the heat storage material 14 releases the oxygen. Namely, the heat storage material 14 is changed into the substance which is reduced compared to the original state (i.e., the substance in which the heat is stored). After the release of the oxygen is finished, the upstream valve 17 and the downstream valve 18 are closed to function as shutoff valves. Thus, the heat storage material 14 is prevented from being oxidized again by the air entering from the outside. Whether or not the release of the oxygen is finished is judged by measuring the temperature to know whether or not the endothermic reaction is finished.

When releasing heat, as shown in Fig. 11B, after the downstream valve 18 is opened, the first electrode 21 and the third electrode 23 are connected to the power source (switch SW1 shown in Fig. 9 is closed and SW2 shown in Fig. 9 is connected to the third electrode 23 side to get the connection state shown in Fig. 11B) to supply DC or AC power. Thus, a part of the heat transfer material 15 is heated and the rest of the heat transfer material 15 is gradually heated by heat transfer so that the entire heat transfer material 15 is heated. Consequently, the heat storage material 14 is heated. When the heat storage material 14 reaches a certain temperature (predetermined temperature), the upstream valve 17 which is a shutoff valve of the upstream side located near the first electrode 21 is opened. Thus, the air is introduced in the container 26 from the outside. Consequently, the oxygen contained in the air is reacted with the heat storage material 14 for generating the heat. The flowing air is heated by the generated heat, and the heated air is transferred to the downstream side. Thus, the temperature of the heat storage material 14 is increased so that the oxidation reaction is started. The oxidation reaction is gradually started toward the downstream side. Consequently, the oxidation reaction is caused in the whole heat storage device 20 to release and supply the heat.

As described above, in the embodiment 2, when releasing heat, the first electrode 21 and the third electrode 23 which are arranged near the inlet (upstream side) of the container 26 are connected for heating the heat storage material 14. In the case where the duration time is short from finishing heat storing to the starting heat releasing, for example, the heat storage material 14 can be gradually heated from near the inlet of the container 26 to near the outlet of the container 26 by a small amount of electric power. Thus, there is a merit of saving energy.

Same as the heat storage device 10 of the embodiment 1, the heat storage device 20 of the embodiment 2 is operated only by the air and the electric power. The heat storage device 20 can be downsized because the heat storage device 20 has a simple structure comprised of: a heat storage material 14; a heat transfer material 15 for heating the heat storage material 14; at least a pair of electrodes 21, 22, 23; a container 26 containing the heat storage material 14, the heat transfer material 15 and the at least a pair of electrodes 21, 22, 23; and an upstream valve 17 and a downstream valve 18 for shielding the inside of the container 26 from the outside of the container 26.

Consequently, the heat storage device of the embodiment 2 does not occupy large space when mounted on the electric car. Furthermore, the heat can be stored and released efficiently because the electric power is converted into heat of chemical reaction in the air and densely stored and the stored heat can be extracted at high rate at an arbitrary time when the heat is needed. Since the water is not required when the heat storage device is used as a heater, the heat storage device can be used without problems even in winter.

As explained above, same as the heat storage device of the embodiment 1, when the heat storage device of the embodiment 2 is used, because the heat storage device is operated only by the air and the electric power, the shape can be simple and small. The heat can be stored and released efficiently because the electric power is converted into heat of chemical reaction in the air without requiring a special environment and densely stored and the stored heat can be extracted at high rate at an arbitrary time when the heat is needed.

Although the heat transfer material 15 and the containers 16, 26 are described as separate components in the heat storage devices 10, 20 of the above described embodiments 1, 2, these components can be integrated. For example, the heat transfer material 15 can have the function of the containers 16, 26.

As described above, in the heat storage device of the present invention, the electric power is converted into heat of chemical reaction in the air and densely stored and the stored heat can be extracted at high rate at an arbitrary time when the heat is needed. Therefore, the heat storage device of the present invention can be also applied to rapid heating of the electric car, heat recovery of high-temperature batch furnace or the like without being limited to the electric car. It is also possible that the heat transfer material is heated by introducing high-temperature exhaust gas of 900°C as a heat source for heating the heat transfer material only when the operation of storing heat in the present invention (i.e., when the heat storage material is reduced).

Note that various embodiments can be freely combined, any configurations of the embodiments can be modified, and any configurations of the embodiments can be omitted in the present invention within the scope of the invention as defined in the appended claims.

### Industrial Applicability

The heat storage device of the present invention can be applied to rapid heating of the electric car, heat recovery of high-temperature batch furnace or the like without being limited to the electric car.

### [Description of the Reference Numerals]

10, 10', 20: heat storage device
11, 21: first electrode
12, 22: second electrode
14: heat storage material
15, 15' : heat transfer material
16, 26: container
17: upstream valve
18: downstream valve
23: third electrode

## Claims

1. A heat storage device (10, 10', 20), comprising:
a heat storage material (14) configured to be oxidized and deoxidized by a temperature control operation; **characterized in that** the heat storage device comprises
a heat transfer material (15, 15') for heating the heat storage material (14); and
at least a pair of electrodes configured to be connected to a power source for heating the heat transfer material (15, 15').

2. The heat storage device (10, 10', 20) according to claim 1, wherein
the heat transfer material (15, 15') carries the heat storage material (14).

3. The heat storage device (10, 10', 20) according to claim 1 or 2, wherein
an air is made to flow through the heat storage material (14) in one direction, and
the at least a pair of electrodes are a first electrode (11, 21) and a second electrode (12, 22),
the first electrode (11, 21) is arranged on an upstream side end part in a flow path of the air flowing through the heat storage material (14), and
the second electrode (12, 22) is arranged on a downstream side end part in the flow path of the air flowing through the heat storage material (14).

4. The heat storage device (20) according to claim 3, wherein
the at least a pair of electrodes further include a third electrode (23),
the third electrode (23) is arranged adjacent to the first electrode (21) so that the second electrode (22) is nearer to the third electrode (23) than the first electrode (21),
the first electrode (21) and the second electrode (22) are configured to be connected to the power source for storing heat, and
the first electrode (21) and the third electrode (23) are configured to be connected to the power source for releasing the heat.

5. The heat storage device (10, 10', 20) according to any one of claims 1 to 4, further comprising:
a container (16, 26) containing the heat storage material (14), the heat transfer material (15, 15') and the at least a pair of electrodes;
an upstream valve (17) provided on an upstream inlet of the container (16, 26) for shielding an inside of the container (16, 26) from an outside of the container (16, 26); and
a downstream valve (18) provided on a downstream outlet of the container (16, 26) for shielding the inside of the container (16, 26) from the outside of the container (16, 26).

## Patentansprüche

1. Wärmespeichervorrichtung (10, 10', 20), umfassend:
ein Wärmespeichermaterial (14), das so konfiguriert ist, dass es durch einen Temperatursteuervorgang oxidiert und desoxidiert wird, **dadurch gekennzeichnet, dass** die Wärmespeichervorrichtung Folgendes umfasst
ein Wärmeübertragungsmaterial (15, 15') zum Erwärmen des Wärmespeichermaterials (14); und
mindestens ein Elektrodenpaar, das so konfiguriert ist, dass es an eine Stromquelle zum Erwärmen des Wärmeübertragungsmaterials (15, 15') verbunden werden kann.

2. Wärmespeichervorrichtung (10, 10', 20) nach Anspruch 1, wobei
das Wärmeübertragungsmaterial (15, 15') das Wärmespeichermaterial (14) trägt.

3. Wärmespeichervorrichtung (10, 10', 20) nach Anspruch 1 oder 2, wobei
eine Luft durch das Wärmespeichermaterial (14) in einer Richtung zum Strömen gebracht wird, und
das mindestens eine Elektrodenpaar eine erste Elektrode (11, 21) und eine zweite Elektrode (12, 22) ist,
wobei die erste Elektrode (11, 21) an einem vorgeschalteten Endteil in einem Strömungsweg der Luft angeordnet ist, die durch das Wärmespeichermaterial (14) strömt, und
die zweite Elektrode (12, 22) an einem nachgeschalteten Endteil im Strömungsweg der Luft angeordnet ist, die durch das Wärmespeichermaterial (14) strömt.

4. Wärmespeichervorrichtung (20) nach Anspruch 3, wobei
das mindestens eine Elektrodenpaar ferner eine dritte Elektrode (23) beinhaltet,
wobei die dritte Elektrode (23) benachbart zu der ersten Elektrode (21) angeordnet ist, so dass die zweite Elektrode (22) näher an der dritten Elektrode (23) als die erste Elektrode (21) liegt,
die erste Elektrode (21) und die zweite Elektrode (22) so konfiguriert sind, dass sie mit der Energiequelle zum Speichern von Wärme verbunden werden können, und
die erste Elektrode (21) und die dritte Elektrode (23) so konfiguriert sind, dass sie mit der Energiequelle zum Freisetzen von Wärme verbunden werden können.

5. Wärmespeichervorrichtung (10, 10', 20) nach einem der Ansprüche 1 bis 4, ferner umfassend:
einen Behälter (16, 26), der das Wärmespeichermaterial (14), das Wärmeübertragungsmaterial (15, 15') und das mindestens eine Elektrodenpaar enthält;
ein vorgeschaltetes Ventil (17), das an einem vorgeschalteten Einlass des Behälters (16, 26) bereitgestellt ist, um das Innere des Behälters (16, 26) von der Außenseite des Behälters (16, 26) abzuschirmen; und
ein nachgeschaltetes Ventil (18), das an einem nachgeschalteten Auslass des Behälters (16, 26) bereitgestellt ist, um das Innere des Behälters (16, 26) von der Außenseite des Behälters (16, 26) abzuschirmen.

## Revendications

1. Dispositif (10, 10', 20) de stockage de chaleur, le dispositif comprenant :
un matériau (14) de stockage de chaleur, conçu pour être oxydé et désoxydé au moyen d'une opération de régulation de température ;
**caractérisé en ce que** le dispositif de stockage de chaleur comprend :
un matériau (15, 15') de transfert de chaleur permettant de chauffer le matériau (14) de stockage de chaleur ; et
au moins deux électrodes conçues pour être connectées à une source d'alimentation afin de chauffer le matériau de transfert de chaleur (15, 15').

2. Le dispositif (10, 10', 20) de stockage de chaleur selon la revendication 1, dans lequel
le matériau (15, 15') de transfert de chaleur porte le matériau (14) de stockage de chaleur.

3. Le dispositif (10, 10', 20) de stockage de chaleur selon les revendications 1 ou 2, dans lequel
de l'air est amené à couler à travers le matériau (14) de stockage de chaleur dans une direction, et
les deux électrodes ou plus comprennent une première électrode (11, 21) et une deuxième électrode (12, 22),
la première électrode (11, 21) est disposée sur une partie d'extrémité côté amont dans un circuit d'écoulement de l'air coulant à travers le matériau (14) de stockage de chaleur, et
la deuxième électrode (12, 22) est disposée sur une partie d'extrémité côté aval dans le circuit d'écoulement de l'air coulant à travers le matériau (14) de stockage de chaleur.

4. Le dispositif (20) de stockage de chaleur selon la revendication 3, dans lequel les deux électrodes ou plus comprennent en outre une troisième électrode (23),
la troisième électrode (23) est disposée adjacente à la première électrode (21) de telle manière que la deuxième électrode (22) soit plus proche de la troisième électrode (23) que de la première électrode (21),
la première électrode (21) et la deuxième électrode (22) sont conçues pour être connectées à la source d'alimentation afin de stocker de la chaleur, et
la première électrode (21) et la troisième électrode (23) sont conçues pour être connectées à la source d'alimentation afin de libérer la chaleur.

5. Le dispositif (10, 10', 20) de stockage de chaleur selon l'une quelconque des revendications 1 à 4, comprenant en outre :
un récipient (16, 26) contenant le matériau (14) de stockage de chaleur, le matériau (15, 15') de transfert de chaleur et les deux électrodes ou plus ;
une soupape amont (17) disposée au niveau d'une entrée amont du récipient (16, 26) afin de protéger un intérieur du récipient (16, 26) d'un extérieur du récipient (16, 26) ; et
une soupape aval (18) disposée au niveau d'une sortie aval du récipient (16, 26) afin de protéger l'intérieur du récipient (16, 26) de l'extérieur du récipient (16, 26).
